# EUROPÄISCHE PATENTSCHRIFT

(11) **EP 3 083 710 B1**
(45) Veröffentlichungstag und Bekanntmachung des Hinweises auf die Patenterteilung: **22.08.2018**
(21) Anmeldenummer: 14802401.1
(22) Anmeldetag: 19.11.2014
(51) Int. Cl.: C08F 220/12, C08F 220/56, C08F 2/38, C08G 18/62, C08G 18/81, C08F 8/00, C08F 290/04, C08F 220/14, C08F 220/18, C08F 212/08

(54) **VERFAHREN ZUR HERSTELLUNG KURZKETTIGER MAKROMOLEKÜLE AUF BASIS VON ACRYLATMONOMEREN**
PROCESS FOR PRODUCING SHORT-CHAIN MACROMOLECULES BASED ON ACRYLATE MONOMERS
PROCÉDÉ DE PRODUCTION DE MACROMOLÉCULES À CHAÎNE COURTE À BASE DE MONOMÈRES D'ACRYLATE

(30) Priorität: 18.12.2013 DE 102013226503
(43) Veröffentlichungstag der Anmeldung: 26.10.2016
(73) Patentinhaber: tesa SE, 22848 Norderstedt (DE)
(72) Erfinder: LÜHMANN, Bernd, 22844 Norderstedt (DE); PRENZEL, Alexander, 20259 Hamburg (DE); PÜTZ, Benjamin, 22527 Hamburg (DE); RITTER, Helmut, 42111 Woppertal (DE); ZÖLLNER, Stephan, 21244 Buchholz /Nordheide (DE)
(86) Internationale Anmeldenummer: PCT/EP2014/075018
(87) Internationale Veröffentlichungsnummer: WO 2015/090819

(56) Entgegenhaltungen:
- GB-A- 2 301 102
- US-A- 5 679 752
- BOUTEVIN B ET AL: "Synthesis of butyl acrylate/methyl methacrylate diblock copolymers by coupling of two telomers", EUROPEAN POLYMER JOURNAL, PERGAMON PRESS LTD. OXFORD, GB, Bd. 30, Nr. 5, 1. Mai 1994 (1994-05-01), Seiten 615-619, XP024053282, ISSN: 0014-3057, DOI: 10.1016/0014-3057(94)90070-1 [gefunden am 1994-05-01]

## Beschreibung

Die Erfindung betrifft ein Verfahren zur Herstellung von kurzkettigen Polymeren auf Basis von radikalisch polymerisierbaren Acrylatmonomeren. Die Polymere weisen an einem Kettenende zur Addition oder Substitution befähigte funktionelle Gruppe auf.

In der chemischen Industrie besteht zunehmend das Interesse an endgruppenfunktionalisierten kurzkettigen Polymeren mit kontrollierten Funktionalitätsgraden, also möglichst gleicher Anzahl entsprechender Funktionen pro Polymer. Solche kurzkettigen Polymere können beispielweise als Makromoleküle zum Aufbau höherer Polymere eingesetzt werden, sind aber auch für eine Vielzahl weiterer Reaktionen nützlich.

Eine Methode zum Aufbau höhermolekularer Polymersysteme ist der Einsatz endgruppenfunktionalisierter Makromoleküle. Solche endgruppenfunktionalisierten kurzkettigen Makromoleküle werden daher auch als Prepolymere bezeichnet (im weiteren Sinne versteht man unter "Prepolymeren" solche oligomeren bis polymeren - insbesondere als Zwischenstufe erhältlichen - Verbindungen, die ihrerseits zur Weiterverarbeitung zu höhermolekularen Polymeren vorgesehen sind). Als Prepolymere eingesetzte Makromoleküle liegen häufig im Molmassenbereich von 500 bis ca. 100 000 g/mol, insbesondere im Bereich 1 000 bis 20 000 g/mol. Der Einsatzbereich dieser Prepolymere ist daher für eine Vielzahl verschiedener Aufbaureaktionen gegeben.

Endgruppenfunktionalisierte Makromoleküle können durch geeignete Herstell- und Polymerisationsverfahren erzeugt werden. Allerdings ist es häufig schwierig, Makromoleküle mit copolymerisierbaren endständigen Gruppen in Polymerisationsreaktionen herzustellen, da die copolymerisierbare Gruppe selbst bereits zur Teilnahme an der Polymerisationsreaktion neigt. Daher kann man den Weg gehen, eine nicht oder schlecht copolymerisierbare endständige funktionale Gruppe der Makromoleküle erst durch eine der Polymerisation nachgelagerte Modifikation in eine polymerisationsfähige, insbesondere eine radikalisch polymerisationsfähige Endgruppe zu überführen, um umfunktionalisierte Makromoleküle als Prepolymere zu erhalten. Prepolymere können durch die endständige funktionelle Gruppe dann zum Beispiel zum Aufbau von Blockcopolymeren eingesetzt werden, oder durch radikalische Copolymerisation der umfunktionalisierten Makromoleküle mit weiteren radikalisch polymerisierbaren Monomeren können beispielweise Kammcopolymere synthetisiert werden.

Die sog. "lebende" Polymerisation, wie die anionische Polymerisation, eignet sich besonders zum Aufbau von solchen Polymeren mit definierten Molekulargewicht und Endgruppenfunktionalisierung. Die US 3,842,059 lehrt die Herstellung von Makromolekülen aus Vinylaromaten mit enger Molmassenverteilung und einer funktionalen bzw. polymerisierbaren Endgruppe an nur einem Kettenende. Die anionische Polymerisation findet jedoch industriell weniger Verwendung. Verantwortliche Gründe hierfür sind die Kosten und die aufwendige Umsetzung des Verfahrens. Anionisch polymerisierbare Monomere sowie die für die Reaktion benötigten Initiatoren sind meist teurer als Monomere und Initiatoren für eine radikalische Polymerisation. Anionische Polymerisationen erfordern organische Lösungsmittel, die teuer, gesundheits- und umweltschädlich sind. Die anionische Polymerisation ist durch das wachsende Makroanionen ferner empfindlich gegenüber protonenliefernden Verunreinigungen. Kettenabbrechende Verbindungen müssen rigoros ausgeschlossen werden, was allerdings bei industriellen Reaktoren mit hohem Aufwand verbunden ist.

Eine weitaus kostengünstigere und schnell durchführbare Methode ist die freie radikalische Polymerisation. Großtechnisch hat sie eine vorranginge Stellung, da sie weitestgehend unempfindlich gegenüber Verunreinigungen ist und viele Monomere der radikalischen Polymerisation zugänglich sind. Endgruppenfunktionalisierung von Polymeren mittels freier radikalischer Polymerisation ist durch Verwendung von funktionellen Polymerisationsreglern möglich. Zu den radikalisch polymerisierbaren Monomeren zählen auch die (Meth)Acrylverbindungen. Die Polymerisate dieser Monomere zeichnen sich in der Regel durch Farblosigkeit sowie oxidations- und verfärbungsstabile Eigenschaften aus. Prepolymere auf Basis von (Meth)Acrylverbindungen bieten demzufolge viele Vorteile in Bezug auf die genannten Eigenschaften. Zudem sind durch die Wahl der Monomere gezielt Glastemperatur und Polarität der Prepolymere steuerbar.

Polymerisationsregler (im Rahmen dieser Schrift auch einfach als "Regler" bezeichnet) sind solche Verbindungen, die in der Lage sind, von den Enden der wachsenden Makromoleküle die Radikalfunktionalität zu übernehmen und dann selbst das Wachstum eines neuen Makromoleküls zu beginnen. Das Wachstum des Makromoleküls, dessen Radikalfunktionalität übernommen wurde, wird dadurch beendet. Die Regler sind damit in der Lage, der Polymerisationsgrad der entstehenden Makromoleküle zu begrenzen, ohne die Reaktionskinetik maßgeblich zu beeinflussen. Die Neigung zur Übertragung der Radikalfunktion auf den Polymerisationsregler wird durch die Übertragungskonstante (Cₜᵣ) angegeben (vgl. beispielsweise: J. Brandrup, E.H. Immergut, Polymer Handbook, 4th. Ed., Seiten II/97 bis II/98).

Als Polymerisationsreglerfür die radikalische Polymerisation von (Meth)Acrylverbindungen eignen sich unter anderem Halogenalkane oder organische Thiole, welche neben der regelnden Gruppe noch eine weitere funktionelle Gruppe tragen. Durch die Wahl der entsprechenden Regler kann somit die gewünschte Endgruppe an dem Polymer eingeführt werden. Aufgrund ihrer hohen Neigung zur Übertragung bei der radikalischen Polymerisation werden bevorzugt funktionelle organischen Thiole verwendet.

Die funktionellen Thiole finden vor allem Anwendung bei der der Herstellung von endgruppenfunktionalisierten Makromolekülen auf Basis von (Meth)Acrylsäureestern. Dieses Verfahren ist beispielsweise von Boutevin beschrieben (Polymer Bulletin 45, 487-494 (2001)). Die funktionellen Thiole lassen sich hier insbesondere gut einsetzen, da diese bei der radikalischen Polymerisation der (Meth)Acrylsäureester eine Übertragungskonstante von Cₜᵣ < 1 aufweisen. Dadurch ist gewährleistet, dass es bis zu einem vollständigen Umsatz der Monomere zu Übertragungsreaktionen kommen kann, da das Thiol während der Polymerisation nicht vollständig verbraucht wird.

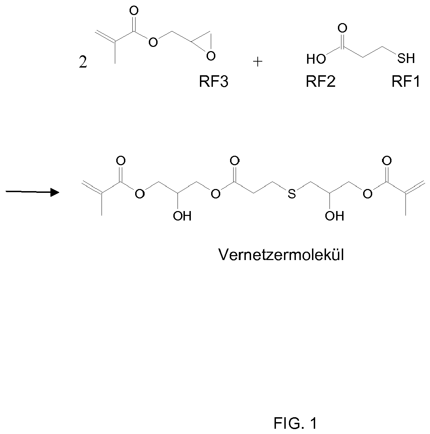

Das Verbleiben von Restreglermengen im Produkt führt allerdings zu erheblichen Nachteilen. Zum einen führen die thiolgruppenhaltigen Verbindungen zu einem unangenehm starken Geruch der Produkte, zum anderen behindert das nicht umgesetzte Thiol die nachfolgende Reaktion zum Prepolymer, und es kommt zu unerwünschten Nebenreaktionen. Neben der reaktiven funktionellen Gruppe, die eigentlich für diese Umsetzung vorgesehen ist, kann nämlich auch die SH-Gruppe der Thiole aufgrund deren eigenen nukleophilen Eigenschaften mit den ungesättigten Elektrophilen, mit denen die Umsetzung beabsichtigt ist, reagieren, so dass es zur Bildung niedermolekularer Vernetzermoleküle kommt. Die Reaktion ist schematisch in der Fig. 1 gezeigt. Die Prepolymere werden beispielweise zur Herstellung von kammartig aufgebauten höhermolekularen Polymeren eingesetzt. Hierzu werden die mit copolymerisierbaren Doppelbindungen ausgerüsteten Prepolymere mit anderen Acrylatmonomeren copolymerisiert. Werden die vorstehend beschriebenen niedermolekularen Vernetzermoleküle nicht von den Prepolymeren getrennt, kommt es bei der Herstellung der Kammpolymere zur unkontrollierten und ungewollten Gelierung während der Polymerisation.

Eine Aufreinigung der Prepolymeren ist daher bei den aus dem Stand der Technik bekannten Verfahren zwingend notwendig. Dies ist ein zusätzlicher Prozessschritt bei der industriellen Herstellung der Makromonomere, welcher kosten- und zeitintensiv ist. Durch zusätzliche Prozessschritte werden die Kosten- und Zeitvorteile, die sich bei dem Einsatz freier radikalischer Polymerisationen in der Regel ergeben, wieder gemindert. Die Attraktivität dieser Verfahren nehmen daher für den großtechnischen Einsatz bei der Herstellung solcher Produkte wieder ab.

Insbesondere der Grad der Funktionalisierung als auch das Zahlenmittel der Molmasse und die Molmassenverteilung sind wichtige Charakteristika für eine qualitative Bewertung der Makromoleküle, insbesondere in Hinblick auf ihre Eignung als Prepolymere.

Der Grad der Funktionalisierung gibt die "Reinheit" der Prepolymeren wider. Trägt das Makromolekül genau eine funktionelle Endgruppe, so entspricht dies einem idealen Funktionalisierungsgrad von 1. Dementsprechend ist der Wert 0 bzw. 2, wenn an keinem bzw. an beiden Kettenenden eine funktionelle Gruppe vorhanden ist. Aufgrund von Abbruchreaktionen, im speziellen der Kombinationsabbruch zweier Ketten, ist ein Funktionalisierungsgrad von 1 mittels freier radikalischer Polymerisation schwer realisierbar.

Die Molmasse der Prepolymere hat vor allem Einfluss auf die Reaktivität und die physikalischen Eigenschaften. Ist die mittlere Molmasse (Zahlenmittel) der Prepolymere kleiner als etwa 1 000 g/mol ist, so sind die Blöcke für die Verwendung in Blockcopolymeren zu kurz, als dass sich gewünschte physikalische Eigenschaften wie Mikrophasenseparation manifestieren könnten. Ist das Zahlenmittel des Molekulargewichts höher als ca. 20 000 g/mol, so vermindert sich die Reaktivität der Endgruppe mit steigender Molmasse, da durch eine stärkere Knäulung der Prepolymere das funktionelle Kettenende sterisch abgeschirmt wird.

Polymere, die durch einen freien radikalischen Polymerisationsprozess gewonnen werden, zeigen regelmäßig Polydispersitäten (Polydispersität D = gewichtsmittleres Molekulargewicht M_{w} / zahlenmittleres Molekulargewicht Mₙ) der Molmassen, die deutlich größer sind als die der in lebenden Polymerisationen hergestellten Polymere. Es liegen bei einer solchen breiten Molmassenverteilung von sehr kurzkettigen bis zu langkettigen Makromolekülen Moleküle vieler verschiedener Kettenlängen im Polymer vor. In Bezug auf die oben beschriebenen Eigenschaften der erhaltenen endgruppenfunktonalen Prepolymere hat dies großen Einfluss. Ein Zahlenmittel der Molmasse von 1 000 g/mol bis 20 000 g/mol mit einer möglichst engen Verteilung der Molmassen ist daher erstrebenswert.

### Aufgabe

Aufgabe der Erfindung ist es, ein industriell effektives und kostengünstiges Verfahren zur Herstellung von Makromolekülen mit endständiger Funktionalisierung zur Verfügung zu stellen. Vorteilhaft sollte das Herstellverfahren auf Aufreinigungsschritte verzichten können. Es wird angestrebt, dass der Funktionalisierungsgrad der Prepolymere, also die Zahl der funktionellen Gruppen pro Makromolekül, möglichst nahe an 1 liegt. Sehr bevorzugt sollten die erhaltenen Makromoleküle engverteilt sein.

### Lösung

Die Erfindung betrifft dementsprechend ein Verfahren, welches dazu geeignet ist, endgruppenfunktionalisierte Makromoleküle ("Oligomer-Makromoleküle") herzustellen, deren Funktionalitätsgrad - also die gemittelte Zahl der Funktionalisierungen pro Makromolekül - sehr nahe bei 1 liegt Zudem ist das Verfahren geeignet, Makromoleküle mit einer sehr engen Polydispersität herzustellen.

Die Aufgabe konnte gelöst werden, indem der freien radikalischen Polymerisation von Alkyl(meth)acrylverbindungen in Gegenwart von funktionellen Thiolen radikalisch polymerisierbare Vinylaromaten zugesetzt wurde. Die Einsatzmenge der Vinylaromaten betrug dabei 5 bis 20 Mol-% bezogen auf die Menge aller eingesetzten Monomere.

Das erfindungsgemäße Verfahren ist dementsprechend ein solches Verfahren zur Herstellung von endgruppenfunktionalisierten Oligomeren auf Basis von Acrylmonomeren mittels radikalischer Polymerisation, initiiert durch zumindest einen Initiator, ausgehend von einer Monomermenge aus
80 bis 95 Mol-% mindestens eines Monomeren A, ausgewählt aus der Gruppe, bestehend aus Acrylaten der allgemeinen Formel CH₂=CH(COOR^{I}), Methacrylaten der allgemeinen Formel CH₂=C(CH₃)(COOR^{I}), Acrylamiden der allgemeinen Formel CH₂=CH(CONR^{II}R^{III}) und Methacrylamiden der allgemeinen Formel CH₂=C(CH₃)(CONR^{II}R^{III}), wobei
   R^{I} ein Alkylrest mit ein bis 26 C-Atomen ist und R" und R^{III} jeweils Alkylreste mit ein bis 26 C-Atomen oder Wasserstoff sind, und
5 bis 20 Mol-% mindestens eines Monomeren B, ausgewählt aus der Gruppe, bestehend aus Styrol, o-Methylstyrol, m-Methylstyrol, p-Methylstyrol, 4-tert-Butylstryrol, 2,4,6-Trimethylstyrol, 4-Vinylanisol, 4-Triflourmethylstyrol, 4-Vinylbiphenyl, 2-Vinylnaphtalen und 9-Vinylanthracen,
   wobei
   - die Summe der Mengen der Monomeren A und der Monomeren B 100 Mol-% ergibt,
   - die Polymerisation mittels eines difunktionellen Reglers umfassend die funktionellen Gruppen R_{F1} und R_{F2} geregelt wird, wobei die Gruppe R_{F1} eine unsubstituierte Sulfanylgruppe ist und wobei die Gruppe R_{F2} des Reglers gewählt wird aus der Liste, bestehend aus Hydroxygruppen (-OH), Carboxygruppen (-COOH), geschützten primären Aminogruppen (-NH₂), geschützten sekundären Aminen (-NHR),
   dadurch gekennzeichnet, dass
   - der Initiator ein Azo- oder Peroxo-Initiator ist, der derart gewählt wird, dass er keine funktionellen Gruppen R_{F1} und R_{F2} trägt,
   - die gesamte Monomermenge, der Initiator und der Regler vorgelegt werden,
   - wobei die Menge des Reglers derart gewählt wird, dass das Stoffmengenverhältnis von (insgesamt eingesetzten) Monomeren zu (insgesamt eingesetzten) Reglermolekülen zwischen 100 : 20 und 100 : 0,5 beträgt,
   - die Polymerisation bis zu einem Monomerumsatz von mindestens 96 % geführt wird,
   - die Restreglermenge kleiner als 5 Mol-% ist,
   - und in einem nachfolgenden Verfahrensschritt die so erhaltenen Makromoleküle in demselben Reaktor, in dem die Polymerisation durchgeführt wurde, mit zumindest einer Verbindung Z umgesetzt werden, die eine funktionelle Gruppe R_{F3} und eine ethylenische Doppelbindung aufweist,
   - wobei zumindest der die ethylenische Doppelbindung enthaltende Teil der Verbindung Z durch Reaktion derfunktionellen Gruppe R_{F2} mit der funktionellen Gruppe R_{F3} an die Makromoleküle angeknüpft wird.

In bevorzugter Vorgehensweise wird der Rest R^{I} zu einem Alkylrest mit einem bis 12 C-Atomen gewählt, und/oder es werden die Reste R" und/oder R^{III} zu Alkylresten mit einem bis 12 C-Atomen oder zu Wasserstoff gewählt.

Der jeweilige Monomerumsatz und Reglerumsatz zu einem beliebigen Zeitpunkt lassen sich durch Gaschromatografie bestimmen.

Bei der Reaktion entstehen endständig mit einer ethylenischen Doppelbindung funktionalisierte Oligomere mit im Wesentlichen der gleichen Molmasse wie die im ersten Schritt entstandenen Makromoleküle; wobei das Polymer die gleiche Polydispersität wie vor der Umsetzung mit den Verbindungen Z aufweist.

Das erfindungsgemäße Verfahren zeichnet sich insbesondere dadurch aus, dass es auf einem zweistufigen Prozess basiert, bei dem zunächst durch den Einsatz von funktionellen Thioreglern ein endgruppenfunktionalisiertes Makromolekül entsteht, welches in einem vorteilhaften zweiten Schritt gezielt mit der gewünschten insbesondere polymerisationsfähigen Endgruppe versehen wird. Der Funktionalisierungsgrad liegt nach dem ersten Schritt insbesondere zwischen 0,9 und 1,1. Die zahlenmittlere Molmasse Mₙ der endgruppenfunktionalisierten Oligomere nach dem zweiten Schritt liegt insbesondere zwischen 1.000 g/mol bis 10.000 g/mol, die Polydispersität bei maximal 3, insbesondere bei maximal 2,5, vorzugsweise bei maximal 2 und besonders bevorzugt bei maximal 1,5.

Da die Umsetzung im zweiten Schritt in der Regel mit kurzkettigen Elektrophilen stattfindet, deren Molmasse deutlich geringer ist als die der Makromoleküle, ändert sich die mittlere Molmasse Mₙ durch den zweiten Schritt in der Regel nicht wesentlich. Es ist von Vorteil, wenn bereits die Molmasse Mₙ der Makromoleküle nach dem ersten Schritt im Bereich zwischen 1.000 g/mol und 10.000 g/mol liegt, und/oder wenn die Polydispersität dort bereits kleiner als 3 ist.

Bei der erfindungsgemäß hergestellten Makromolekülmenge wird im Rahmen dieser Schrift von Oligomeren gesprochen. Vorliegend soll der Begriff "Oligomer" lediglich zur sprachlichen Abgrenzung von solchen Polymeren mit hohem mittlerem Molekulargewicht dienen; und es sollen insbesondere Polymere bis zu einem zahlenmittleren Molekulargewicht von bis zu 20 000 g/mol von dem Begriff "Oligomer" umfasst sein.

Als Monomermischung - auch als Eduktmischung - wird die Monomer-Vorlage für die Polymerisation bezeichnet, also die Gesamtheit der eingesetzten Monomere.

Als Reaktionsvorlage oder Ausgangsmischung wird die vor Beginn der Polymerisation vorliegende Mischung aus Ausgangsstoffen (Edukten) und eventueller weiterer Komponenten, wie ggf. vorhandene Initiatoren, Regler, Beschleuniger oder dergleichen, und einschließlich des eventuell vorhandenen Lösemittels bezeichnet.

Als Polymerisationsmischung wird die zu dem jeweiligen Zeitpunkt t im Reaktor befindliche Mischung aus Ausgangsstoffen (Edukten), Zwischen- und Endstoffen (Produkten) der Polymerisation, ggf. vorhandenen weiteren Komponenten und ggf. vorhandenem Lösemittel im Reaktor bezeichnet.

Als Polymerisationsergebnis wird die Polymerisationsmischung nach Beendigung bzw. nach Abbruch der Polymerisation verstanden.

Zahlengenaue Mengenangaben werden als Stoffmengenangaben verstanden.

Die Polymerisation der Acvrylmonomere findet in Gegenwart von Vinylaromaten und zumindest eines thiolgruppenhaltigen Reglers (im Folgenden als Thiolregler bezeichnet) statt.

Das erfindungsgemäße Verfahren ist grundsätzlich zur Polymerisation der üblichen polymerisierbaren Acrylmonomere einsetzbar.

Beispiele für erfindungsgemäß sehr geeignete Acrylmonomere, also Monomere A, sind Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat" n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Als Vinylaromaten, also als Monomere im Sinne der Gruppe B, kommen vor allen Dingen Styrol und seine im Kern alkylierten Derivate in Betracht, wie o-Methylstyrol, m-Methylstyrol, p-Methylstyrol, 4-tert-Butylstyrol, 2,4,6-Trimethylstyrol. Aber auch Vinylaromaten wie 4-Vinylanisol, 4-Triflourmethylstyrol, 4-Vinylbiphenyl, 2-Vinylnaphtalen, 9-Vinylanthracene.

Als Regler werden zumindest difunktionelle Regler eingesetzt, die zumindest die funktionellen Gruppen R_{F1} und R_{F2} aufweisen. Dabei ist die Gruppe R_{F1} eine unsubstituierte Sulfanylgruppe - im Rahmen dieser Schrift auch als Thiolgruppe bezeichnet -, und die Gruppe R_{F2} des Reglers ist eine solche Gruppe, die die Polymerisationsreaktion unbeschadet übersteht (beziehungsweise in eine solche Form gebracht werden kann, dass sie die Polymerisationsreaktion unbeschadet übersteht) und in einem weiteren Schritt zur Reaktion mit weiteren funktionellen Gruppen gebracht werden kann. Die Gruppe R_{F2} ist sehr bevorzugt gewählt aus der Gruppe bestehend aus Hydroxygruppen (-OH), Carboxygruppen (-COOH), geschützten primären Aminogruppen (-NH₂), geschützten sekundären Aminen (-NHR). Dabei wird die unsubstituierte Sulfanylgruppe zur Regelung der Polymerisationsreaktion genutzt, während die Gruppe R_{F2} sich bei der eigentlichen Polymerisation inert verhält. Sofern die Gruppe R_{F2} eine solche ist, die selbst regelnd wirkt oder zu Nebenreaktionen führen könnte, wird sie vor dem Einsatz des Reglers mit einer Schutzgruppe geschützt. Insbesondere sofern primäre oder sekundäre Amine als funktionelle Gruppen R_{F2} gewählt sind, werden diese Gruppen sehr bevorzugt in geschützter Form eingesetzt, also die entsprechenden Gruppen der Regler vor deren Einsatz mit einer Schutzgruppe versehen.

Es kann ein einzelner Regler oder eine Kombination zweier oder mehrerer Regler der genannten Art eingesetzt werden, wobei sich bei mehr als einem Regler die oben genannte gesamt einzusetzende Reglermenge auf die Gesamtheit aller eingesetzten Regler der erfindungsgemäß bestimmten Art bezieht.

Als Regler können beispielsweise - ohne Anspruch auf Vollständigkeit - insbesondere die folgenden Substanzen gewählt werden:
2-Mercaptoethanol, 3-Mercaptopropanol, 4-Mercaptobutanol, 5-Mercaptobutanol, 6-Mercaptohexanol, 11-Mercaptoundecanol, 16-Mercaptohexadecanol, 1-Mercapto-2-Propanol, 3-Mercapto-1-propanol, 3-Mercapto-1-Hexanol, 2-Methyl-3-Sulfanylpropion-säure, 4-Mercaptobuttersäure, 6-Mercaptohexansäure, 2-Mercaptopropionsäure, 3-Mercaptopropionsäure, Mercaptoessigsäure, 11-Mercaptoundecansäure, 16-Mercaptohexadecansäure, 2-Aminoethanthiol Hydrochlorid.

Besonders hervorragende Regler aus der obigen Liste sind 2-Aminoethanthiol Hydrochlorid, 2-Mercaptoethanol, 3-Mercaptopropionsäure, 2-Mercaptopropionsäure und 2-Mercaptoessigsäure.

Die eingesetzte Menge des Reglers, d.h. des funktionellen Thiols, liegt zwischen 0,5 und 20 Mol-% in Bezug auf die kumulierte Gesamtmenge an Vinylaromaten und Alkyl(meth)-acrylverbindungen, d.h. das Stoffmengenverhältnis von (insgesamt eingesetzten) Monomeren zu (insgesamt eingesetzten) Reglermolekülen beträgt zwischen 0,5 : 100 und 20 : 100. Vorzugsweise liegt die eingesetzte Reglermenge zwischen 1 und 10 Mol-% in Bezug auf die kumulierte Gesamtmenge an Ausgangsmonomeren.

Als Initiatoren können alle bekannten Initiatoren für radikalische Polymerisationen verwendet werden wie beispielsweise Peroxide, Azoverbindungen und Peroxosulfate, sofern sie keine der funktionellen Gruppen R_{F1} und R_{F2} tragen. Auch Initiatorgemische können verwendet werden. Besonders bevorzugte Initiatoren sind 2,2'-Azobis(2-methylpropionitril) (AIBN), 2,2'-Azobis(2-methylbutyronitril) und Bis-(4-tert-butylcyclohexyl)peroxydicarbonat.

Dabei wird der Regler vorzugsweise in einem Stoffmengenüberschuss in Bezug auf den Initiator zugesetzt. Dabei beträgt der Stoffmengenüberschuss an Regler in Bezug auf den Initiator vorzugsweise mindestens das Doppelte, insbesondere mindestens das 5fache und besonders bevorzugt mindestens das 10fache.

Die Polymerisation wird durchgeführt, indem die gesamte Monomermenge, Regler und Initiator sowie ggf. das Lösungsmittel vorgelegt und vermischt werden. Als Lösungsmittel können alle gängigen Lösungsmittel für Polymerisationen auf Acrylatbasis verwendet werden. Alle inerten und aprotischen Lösungsmittel können zum Einsatzkommen.

Die Temperaturführung ist abhängig vom gewählten Initiator und von dem gewählten Lösungsmittel.

Der Polymerisationsumsatz lässt sich dabei online überwachen. Online-Kontrollen des Polymerisationsumsatzes können durch Anwendung von nah-Infrarot-Spektroskopie erfolgen und sind bekannt, vergleiche beispielsweise "On-line Determination of the Conversion in a Styrene Bulk Polymerization Batch Reactor using Near-Infrared Spectroscopy"; Journal of Applied Polymer Science, Volume 84 (2002), Issue 1, Seiten 90-98.; Die dort geschilderte Methode wird vorteilhaft für das erfindungsgemäße Verfahren angewandt. Eine Übersicht über weitere Verfahren zur Online-Bestimmung des Polymerisationsumsatzes findet sich in "Recent Developments in Hardware Sensors for the On-Line Monitoring of Polymerization Reactions", J.M.S.-Rev. Macromol. Chem Phys., C39(1), 57-134 (1999).

Alternativ kann der Polymerisationsumsatz durch Probennahme und Analyse der entnommenen Probe nach bekannten Verfahren bestimmt werden.

Die Polymerisation wird bis zu einem Monomerumsatz von mindestens 96%, vorzugsweise mindestens 97% geführt. Ferner soll die Restreglermenge weniger als 5 Mol-%, vorzugsweise weniger als 3 Mol-% und besonders bevorzugt weniger als 1 Mol-% betragen.

Bei derart geringen Restreglermengen kann auf eine Aufreinigung der erhaltenen Makromoleküle verzichtet werden, da die Restreglermenge so gering ist, dass zum einen kein unangenehmer Geruch mehr wahrnehmbar ist und zum anderen insbesondere keine Beeinträchtigungen der folgenden Umfunktionalisierungsreaktion durch Gelieren aufgrund von Vernetzungsreaktionen des Thiols mit der elektrophilen Verbindung Z zu erwarten sind.

Um die im ersten Schritt erhaltenen Makromoleküle mit olefinischen Doppelbindungen auszurüsten, wodurch sie weiter polymerisiert werden können, werden diese Makromoleküle in einem nachfolgenden Verfahrensschritt mit zumindest einer Verbindung Z umgesetzt, wobei die Verbindung Z zumindest eine funktionelle Gruppe R_{F3} und zumindest eine olefinische Doppelbindung aufweist. Die Umsetzung kann insbesondere durch eine Kopplungsreaktion wie eine Additions- oder Substitutionsreaktion, erfolgen, wobei eine Substitutionsreaktion besonders bevorzugt ist. Sofern die Gruppen R_{F2} (also die am Oligomer befindlichen Gruppen) geschützt vorliegen, wird bevorzugt zunächst die Schutzgruppe entfernt, damit die Kopplungsreaktion durchgeführt werden kann.

Die Kopplungsreaktion kann insbesondere durch Reaktion der - ggf. entschützten - funktionellen Gruppe R_{F2} mit der funktionellen Gruppe R_{F3} der Verbindung Z stattfinden, wobei die funktionelle Gruppe R_{F3} so gewählt ist, dass sie zu Additions- oder Substitutionsreaktionen mit der funktionellen Gruppe R_{F2} hervorragend geeignet ist. Die Verbindung Z wird so gewählt, dass sie außer der funktionellen Gruppe R_{F3} noch zumindest eine olefinisch ungesättigte Doppelbindung aufweist, wobei durch die Kopplungsreaktion zumindest der die olefinische Doppelbindung enthaltende Teil der Verbindung Z an die im ersten Schritt erhaltenen Makromoleküle angeknüpft wird.

In einer bevorzugten Vorgehensweise wird die Reaktion der funktionellen Gruppe R_{F2} der Makromoleküle mit derfunktionellen Gruppe R_{F3} der Verbindung Z katalysiert durchgeführt. Als Katalysatoren für diese Reaktion eigenen sich beispielsweise Reagenzien wie Dimethylbenzylamin oder Tetraethylammoniumbromid.

Besonders bevorzugt wird die Verbindung Z gewählt aus der Liste bestehend aus Acrylsäureanhydriden, Methacrylsäureanhydriden, Glycidylacrylat, Glycidylmethacrylat, Maleinsäureanhydrid, Acrylsäurechlorid, Methacrylsäurechlorid, 2-lsocyanatoethylacrylat, 2-lsocyanatoethyl-methacrylat, 4-Chlormethylstyrol, Itaconsäureanhydrid, 3,4-Epoxycyclohexylmethylacrylat und 3,4-Epoxycyclohexylmethylmethacrylat.

Besitzt die Verbindung Z eine Kohlenwasserstoffkette als Gerüst und befindet sich die olefinisch ungesättigte Doppelbindung an einem End-C-Atom dieser Kohlenwasserstoffkette, so wird diese Doppelbindung auch nach der Einführung in das Oligomer an einem End-C-Atom des (so modifizierten) endgruppenfunktionalisierten Oligomers liegen.

In einer bevorzugten Verfahrensweise wird die Reaktion der Gruppe R_{F2} mit der funktionellen Gruppe R_{F3} bei einer Temperatur von mindestens 100 °C durchgeführt. Besonders bevorzugt kann man derart vorgehen, dass die Reaktion der Gruppe R_{F2} mit der funktionellen Gruppe R_{F3} in demselben Reaktor durchgeführt wird, indem bereits die Polymerisation stattgefunden hat.

Vorzugsweise wird das erfindungsgemäße Verfahren derart durchgeführt, dass die erhaltenen endgruppenfunktionalisierten Oligomere im Mittel 0,9 bis 1,1 durch die Verbindung Z eingeführte ethylenische Doppelbindungen aufweisen.

Makromoleküle, die mit einer Doppelbindung funktionalisiert sind, sind als Comonomere - auch als "Makromonomere" bezeichnet - interessant. Diese können in Polymerisationsreaktionen ihrerseits als Monomere dienen. Auf diese Weise lassen sich zum Beispiel Blockcopolymere herstellen. Auf einfache Art sind so auch Kammpolymere erhältlich.

Durch herkömmliche Polymerisation lassen sich insbesondere solche mit olefinischen Doppelbindungen endständig, d.h. mit einer Doppelbindung zwischen dem letzten und vorletzten C-Atom der jeweiligen Molekülkette, ausgerüsteten Makromoleküle nicht zufriedenstellend erhalten, da die Doppelbindungen im Rahmen der Polymerisation reagieren und somit keine endständigen Doppelbindungen gezielt im erhaltenen Makromolekül eingebaut werden könnten. Weiterhin ist es schwierig, die Makromoleküle derart herzustellen, dass ihre Funktionalität gegen 1 geht - also im Mittel eine Doppelbindung pro Makromolekül vorhanden ist - und dass sie engverteilt sind, also eine niedrige Polydispersität aufweisen. Engverteilte Makromoleküle sind insbesondere dann nützlich, wenn alle Seitenketten der Kammpolymere im Wesentlichen die gleiche Länge haben sollen.

Makromoleküle, die die vorgenannten Anforderungen erfüllen, lassen sich durch das erfindungsgemäße Verfahren erhalten. Gegenstand der Erfindung sind daher außerdem endgruppenfunktionalisierte Oligomere, die jeweils endständig eine olefinische Doppelbindung tragen.

Die erfindungsgemäßen Oligomere sind insbesondere solche auf Acrylatbasis, die ein zahlenmittleres Molekulargewicht im Bereich von 1 000 g/mol bis 20 000 g/mol, insbesondere bis 10 000 g/mol, aufweisen und/oder deren Polydispersität nicht größer als 2,5, bevorzugt nicht größer als 2,0, sehr bevorzugt nicht größer als 1,5 ist, und/oder die einen Funktionalisierungsgrad zwischen 0,9 und 1,1 besitzen, wobei insbesondere vorteilhaft mindestens 98 %, bevorzugt mindestens 99,5 % der Ketten mindestens eine olefinische Doppelbindung tragen.

### Beispiele

Die Erfindung wird im Folgenden anhand von Beispielen näher erläutert. Dabei kommen neben den bereits vorstehend beschriebenen Testmethoden die folgenden Methoden zur Anwendung:

### Methoden

Die Angaben der zahlenmittleren Molmasse Mₙ, der gewichtsmittleren Molmasse M_{w} und der Polydispersität in dieser Schrift beziehen sich auf die Bestimmung per Gelpermeationschromatographie (GPC) bzw. die Auswertung derartiger Messungen.

Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgröße, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung).

**300 MHz ¹H-NMR**-spektroskopische Messungen wurden mit einem Bruker Advance DRX 300 NMR-Spektrometer bei Raumtemperatur aufgenommen.

### Beispiel

Die eingesetzten Mengen für die folgende Reaktion können aus Tabelle 1 entnommen werden.

### Erster Verfahrensschritt

Ein für radikalische Polymerisationen konventioneller 2,5 L-Glasreaktor wurde mit Methylmethacrylat (MMA) [für Makromonomere MM1 bis MM15] bzw. n-Butylacrylat (n-BA) [für Makromonomere MM16 bis MM21], ggf. Styrol, Mercaptoethanol (ME) und Ethylacetat (50 Gew.-%) befüllt (vergleiche die jeweiligen Angaben in Tabelle 1). Nach 45 minütiger Durchleitung von Stickstoffgas unter Rühren wurde der Reaktor auf 70 °C Innentemperatur hochgeheizt und Vazo® 67 (2,2'-Azobis(2-methylbutyronitril) der Firma DuPont) hinzugegeben. Anschließend wurde das äußere Heizbad auf 75 °C erwärmt und die Reaktion konstant bei dieser Außentemperatur durchgeführt. Die Umsätze nach 15 h Reaktionszeit der Monomere und des Thiols können aus Tabelle 1 entnommen werden.

### Zweiter Verfahrensschritt (Umfunktionalisierung mit der Verbindung Z)

Der Lösung wurden nach 15 h Reaktionszeit eine zur eingesetzten Menge Mercaptoethanol äquimolare Menge Isocyanatoethylmethacrylat hinzugegeben. Die Reaktion wurde für weitere 12 h bei einer Heizbadtemperatur von 75°C durchgeführt, um das mit olefinischer Doppelbindung endgruppenfunktionalisierte Oligomer, das Makromonomer, zu erhalten.

### Herstellung des Kammpolymers

Anschließend werden 600 g 2-Ethylhexylacrylat und 800 g Ethylacetat zu dem gelösten Makromonomer hinzugegen. Die Polymerisierbarkeit der eingesetzten Makromonomere kann aus Tabelle 2 entnommen werden.

Nach 45minütiger Durchleitung von Stickstoffgas unter Rühren wurde der Reaktor auf 58 °C geheizt und 0,35 g Vazo® 67 hinzugegeben. Anschließend wurde das äußere Heizbad auf 70 °C erwärmt und die Reaktion konstant bei dieser Außentemperatur durchgeführt. Nach 1 h Reaktionszeit wurden wiederum 0,35 g Vazo® 67 hinzugegeben. Über einen Zeitraum von 5 h wurde jeweils stündlich je nach Viskositätsanstieg mit jeweils 100 g bis 200 g Ethylacetat verdünnt. Zur Reduktion der Restmonomere wurden nach 6 und nach 7 h jeweils 1 g Bis-(4-*tert*-butylcyclohexyl)peroxydicarbonat hinzugegeben und zwischendurch noch mit 100 g Ethylacetat verdünnt. Die Reaktion wurde nach 24 h Reaktionszeit abgebrochen und auf Raumtemperatur abgekühlt.

**Tabelle 1**

| | **MMA** | **Styrol** | **ME** | **Vazo® 67** | **Mn [g/mol]** | **PD** | **F** | **Monomerumsatz** | **Thiolumsatz** | **Isocanato-ethyl-methacrylat** |
|---|---|---|---|---|---|---|---|---|---|---|
| **MM1** | 90,11 g | - | 7,81 g | 0,57 g | 1950 | 1,5 | 1,0 | 97% | 83% | 15,52 g |
| | 90 Mol-% | - | 10 Mol-% | 0,3 Mol-% addiert | | | | | | |
| | 100:0 | | | | | | | | | |
| **MM2** | 98,12 g | - | 1,56 g | 0,57 g | 4900 | 1,7 | 0,98 | 97% | 83% | 3,10 g |
| | 98 Mol-% | - | 2 Mol-% | 0,3 Mol-% addiert | | | | | | |
| | 100:0 | | | | | | | | | |
| **MM3** | 99,12 g | - | 0,78 g | 0,57 g | 9600 | 2 | 0,96 | 98% | 84% | 1,55 g |
| | 99 Mol-% | - | 1 Mol-% | 0,3 Mol-% addiert | | | | | | |
| | 100:0 | | | | | | | | | |
| **MM4** | 87,4 g | 2,81 g | 7,81 g | 0,57 g | 2050 | 1,6 | 1,0 | 97% | 90% | 15,52 g |
| | 87,30 Mol-% | 2,70 Mol-% | 10 Mol-% | 0,3 Mol-% addiert | | | | | | |
| | 97:3 | | | | | | | | | |
| **MM5** | 95,17 g | 3,06 g | 1,56 g | 0,57 g | 5200 | 1,85 | 0,98 | 97% | 90% | 3,10 g |
| | 95,06 Mol-% | 2,94 Mol-% | 2 Mol-% | 0,3 Mol-% addiert | | | | | | |
| | 97:3 | | | | | | | | | |
| **MM6** | 96,15 g | 3,09 g | 0,78 g | 0,57 g | 9850 | 2 | 0,95 | 97% | 90% | 1,55 g |
| | 96,03 Mol-% | 2,97 Mol-% | 1 Mol-% | 0,3 Mol-% addiert | | | | | | |
| | 97:3 | | | | | | | | | |
| **MM7** | 85,60 g | 4,69 g | 7,81g | 0,57 g | 2100 | 1,7 | 0,99 | 97% | 96 % | 15,52 g |
| | 85,50 Mol-% | 4,50 Mol-% | 10 Mol-% | 0,3 Mol-% addiert | | | | | | |
| | 95:5 | | | | | | | | | |
| **MM8** | 93,21 g | 5,10g | 1,56 g | 0,57 g | 5450 | 1,9 | 0,98 | 97% | 96% | 3,10 g |
| | 93,10 Mol-% | 4,90 Mol-% | 2 Mol-% | 0,3 Mol-% addiert | | | | | | |
| | 95:5 | | | | | | | | | |
| **MM9** | 94,16 g | 5,16 g | 0,78 g | 0,57 g | 9750 | 2,3 | 0,96 | 97% | 96% | 1,55 g |
| | 94,05 Mol-% | 4,95 Mol-% | 1 Mol-% | 0,3 Mol-% addiert | | | | | | |
| | 95:5 | | | | | | | | | |
| **MM10** | 81,1 g | 9,37 g | 7,81 g | 0,57 g | 2200 | 2,1 | 0,99 | 97% | 97% | 15,52 g |
| | 81,00 Mol-% | 9,00 Mol-% | 10 Mol-% | 0,3 Mol-% addiert | | | | | | |
| | 90:10 | | | | | | | | | |
| **MM11** | 88,31 g | 10,21 9 | 1,56g | 0,57 g | 5500 | 2,3 | 0,96 | 97% | 97% | 3,10 g |
| | 88,20 Mol-% | 9,80 Mol-% | 2 Mol-% | 0,3 Mol-% addiert | | | | | | |
| | 90:10 | | | | | | | | | |
| **MM12** | 89,21 g | 10,31 | 0,78 g | 0,57 g | 9850 | 2,6 | 0,95 | 97% | 97% | 1,55 g |
| | 89,10 Mol-% | 9,90 Mol-% | 1 Mol-% | 0,3 Mol-% addiert | | | | | | |
| | 90:10 | | | | | | | | | |
| **MM13** | 72,09 g | 18,75 g | 7,81 g | 0,57 g | 2500 | 2,1 | 0,98 | 97% | 99% | 15,52 g |
| | 72,00 Mol-% | 18,00 Mol-% | 10 Mol-% | 0,3 Mol-% addiert | | | | | | |
| | 80:20 | | | | | | | | | |
| **MM14** | 78,49 g | 20,41 g | 1,56 g | 0,57 g | 5850 | 2,4 | 0,95 | 97% | 99% | 3,10 g |
| | 78,40 Mol-% | 19,60 Mol-% | 2 Mol-% | 0,3 Mol-% addiert | | | | | | |
| | 80:20 | | | | | | | | | |
| **MM15** | 79,30 g | 20,62 | 0,78 g | 0,57 g | 9950 | 2,95 | 0,91 | 97% | 99% | 1,55 g |
| | 79,20 Mol-% | 19,80 Mol-% | 1 Mol-% | 0,3 Mol-% addiert | | | | | | |
| | 80:20 | | | | | | | | | |

| | **n-BA** | **Styrol** | **ME** | **Vazo® 67** | **Mn [g/mol]** | **PD** | **F** | **Monomer umsatz** | **Thiol umsatz** | **Isocanato- ethyl- methacrylat** |
|---|---|---|---|---|---|---|---|---|---|---|
| **MM16** | 115,35 g | - | 7,81 g | 0,57 g | 1950 | 1,5 | 1,0 | 97% | 83% | 15,52 g |
| | 90 Mol-% | - | 10 Mol-% | 0,3 Mol-% addiert | | | | | | |
| | 100:0 | | | | | | | | | |
| **MM17** | 125,61 g | - | 1,56 g | 0,57 g | 4900 | 1,7 | 0,98 | 97% | 83% | 3,10 g |
| | 98 Mol-% | - | 2 Mol-% | 0,3 Mol-% addiert | | | | | | |
| | 100:0 | | | | | | | | | |
| **MM18** | 126,89 g | - | 0,78 g | 0,57 g | 9600 | 2 | 0,96 | 98% | 84% | 1,55 g |
| | 99 Mol-% | - | 1 Mol-% | 0,3 Mol-% addiert | | | | | | |
| | 100:0 | | | | | | | | | |
| **MM19** | 109,59 g | 4,69 g | 7,81 g | 0,57 g | 2050 | 1,6 | 1,0 | 97% | 90% | 15,52 g |
| | 85,50 Mol-% | 4,50 Mol-% | 10 Mol-% | 0,3 Mol-% addiert | | | | | | |
| | 95:5 | | | | | | | | | |
| **MM20** | 119,33 g | 5,10 g | 1,56 g | 0,57 g | 5200 | 1,85 | 0,98 | 97% | 90% | 3,10 g |
| | 93,10 Mol-% | 4,90 Mol-% | 2 Mol-% | 0,3 Mol-% addiert | | | | | | |
| | 95:5 | | | | | | | | | |
| **MM21** | 120,54 g | 5,16 g | 0,78 g | 0,57 g | 9850 | 2 | 0,95 | 97% | 90% | 1,55 g |
| | 94,05 Mol-% | 4,95 Mol-% | 1 Mol-% | 0,3 Mol-% addiert | | | | | | |
| | 95:5 | | | | | | | | | |

**Tabelle 2**

| | **Makromonomer** | **Kommentar** |
|---|---|---|
| **PSA 1** | MM 1 | vergelt |
| **PSA 2** | MM 2 | vergelt |
| **PSA 3** | MM 3 | vergelt |
| **PSA 4** | MM 4 | vergelt |
| **PSA 5** | MM 5 | vergelt |
| **PSA 6** | MM 6 | vergelt |
| **PSA 7** | MM 7 | nicht vergelt |
| **PSA 8** | MM 8 | nicht vergelt |
| **PSA 9** | MM 9 | nicht vergelt |
| **PSA 10** | MM 10 | nicht vergelt |
| **PSA 11** | MM 11 | nicht vergelt |
| **PSA 12** | MM 12 | nicht vergelt |
| **PSA 13** | MM 13 | nicht vergelt |
| **PSA 14** | MM 14 | nicht vergelt |
| **PSA 15** | MM 15 | nicht vergelt |
| **PSA 16** | MM 16 | vergelt |
| **PSA 17** | MM 17 | vergelt |
| **PSA 18** | MM 18 | vergelt |
| **PSA 19** | MM 19 | nicht vergelt |
| **PSA 20** | MM 20 | nicht vergelt |
| **PSA 21** | MM 21 | nicht vergelt |

Die Ergebnisse belegen, dass bei gleichem Monomerumsatz nur mit dem erfindungsgemäßen Verfahren ein Verbrauch des Reglers auf mehr als 95 % (bezogen auf die initial eingesetzte Reglermenge) erfolgt. Daher kommt es nur in den erfindungsgemäßen Beispielen zu keiner Vergelung im zweiten Verfahrensschritt. Trotz weitgehend aufgebrauchtem Regler können sehr hohe Monomerumsätze erzielt werden, und die Polydispersität und der Funktionalitätsgrad liegen im jeweils geforderten Wertebereich.

## Patentansprüche

1. Verfahren zur Herstellung von endgruppenfunktionalisierten Oligomeren auf Basis von Acrylmonomeren mittels radikalischer Polymerisation, initiiert durch zumindest einen Initiator, ausgehend von einer Monomermenge aus
80 bis 95 Mol-% mindestens eines Monomeren A, ausgewählt aus der Gruppe, bestehend aus Acrylaten der allgemeinen Formel CH₂=CH(COOR^{I}), Methacrylaten der allgemeinen Formel CH₂=C(CH₃)(COOR^{I}), Acrylamiden der allgemeinen Formel CH₂=CH(CONR^{II}R^{III}) und Methacrylamiden der allgemeinen Formel CH₂=C(CH₃)(CONR^{II}R^{III}), wobei
R^{I} ein Alkylrest mit ein bis 26 C-Atomen ist und R" und R^{III} jeweils Alkylreste mit ein bis 26 C-Atomen oder Wasserstoff sind,
und
5 bis 20 Mol-% mindestens eines Monomeren B, ausgewählt aus der Gruppe, bestehend aus Styrol, o-Methylstyrol, m-Methylstyrol, p-Methylstyrol, 4-tert-Butylstyrol, 2,4,6-Trimethylstyrol, 4-Vinylanisol, 4-Trifluormethylstyrol 4-Vinylbiphenyl, 2-Vinylnaphthalen und 9-Vinylanthracen, wobei
- die Summe der Mengen der Monomeren A und der Monomeren B 100 Mol-% ergibt,
- die Polymerisation mittels eines difunktionellen Reglers umfassend die funktionellen Gruppen R_{F1} und R_{F2} geregelt wird, wobei die Gruppe R_{F1} eine unsubstituierte Sulfanylgruppe ist und wobei die Gruppe R_{F2} des Reglers gewählt wird aus der Liste, bestehend aus Hydroxygruppen (-OH), Carboxygruppen (-COOH), geschützten primären Aminogruppen (-NH₂), geschützten sekundären Aminen (-NHR),
**dadurch gekennzeichnet, dass**
- der Initiator ein Azo- oder Peroxo-Initiator ist, der derart gewählt wird, dass er keine funktionellen Gruppen R_{F1} und R_{F2} trägt,
- die gesamte Monomermenge, der Initiator und der Regler vorgelegt werden,
- wobei die Menge des Reglers derart gewählt wird, dass das Stoffmengenverhältnis von (insgesamt eingesetzten) Monomeren zu (insgesamt eingesetzten) Reglermolekülen zwischen 100 : 20 und 100 : 0,5 beträgt,
- die Polymerisation bis zu einem Monomerumsatz von mindestens 96 % geführt wird,
- die Restreglermenge kleiner als 5 Mol-% ist,
- und in einem nachfolgenden Verfahrensschritt die so erhaltenen Makromoleküle in demselben Reaktor, in dem die Polymerisation durchgeführt wurde, mit zumindest einer Verbindung Z umgesetzt werden, die eine funktionelle Gruppe R_{F3} und eine ethylenische Doppelbindung aufweist,
- wobei zumindest der die ethylenische Doppelbindung enthaltende Teil der Verbindung Z durch Reaktion der funktionellen Gruppe R_{F2} mit der funktionellen Gruppe R_{F3} an die Makromoleküle angeknüpft wird.

2. Verfahren nach Anspruch 1, **dadurch gekennzeichnet, dass**
R^{I} ein Alkylrest mit ein bis 12 C-Atomen ist.

3. Verfahren nach einem der vorangehenden Ansprüche, **dadurch gekennzeichnet, dass** R" und/oder R^{III} jeweils Alkylreste mit ein bis 12 C-Atomen oder Wasserstoff sind.

4. Verfahren nach einem der vorangehenden Ansprüche, **dadurch gekennzeichnet, dass** die Reaktion der Gruppe R_{F2} mit der funktionellen Gruppe R_{F3} eine Substitutionsreaktion ist.

5. Verfahren nach einem der vorangehenden Ansprüche, **dadurch gekennzeichnet, dass** der Regler in einem zumindest 10fachen Stoffmengenüberschuss bezüglich dem Initiator eingesetzt wird.

6. Verfahren nach einem der vorangehenden Ansprüche, **dadurch gekennzeichnet, dass** das Stoffmengenverhältnis von (insgesamt eingesetzten) Monomeren zu (insgesamt eingesetzten) Reglermolekülen zwischen 100 : 10 und 100 : 1 beträgt.

7. Verfahren nach einem der vorangehenden Ansprüche, **dadurch gekennzeichnet, dass** als Regler 2-Aminoethanthiol Hydrochlorid, 2-Mercaptoethanol, 3-Mercaptopropionsäure, 2-Mercaptopropionsäure und/oder 2-Mercaptoessigsäure eingesetzt werden.

8. Verfahren nach einem der vorangehenden Ansprüche, **dadurch gekennzeichnet, dass** die die funktionelle Gruppe R_{F3} und eine ethylenische Doppelbindung aufweisende Verbindung Z gewählt wird aus der Liste enthaltend Acrylsäureanhydrid, Methacrylsäureanhydrid, Glycidylacrylat, Glycidylmethacrylat, Maleinsäureanhydrid, Acrylsäurechlorid, Methacrylsäurechlorid, 2-Isocyanatoethylacrylat, 2-Isocyanatoethylmethacrylat, 4-Chlormethylstyrol, Itaconsäureanhydrid, 3,4-Epoxycyclohexylmethylacrylat, Epoxycyclohexylmethylmethacrylat.

9. Verfahren nach einem der vorangehenden Ansprüche, **dadurch gekennzeichnet, dass** das zahlenmittlere Molekulargewicht der erhaltenen Makromoleküle im Bereich von 1 000 g/mol bis 20 000 g/mol, insbesondere bis 10 000 g/mol liegt.

10. Verfahren nach einem der vorangehenden Ansprüche, **dadurch gekennzeichnet, dass** die Polydispersität der erhaltenen Polymere nicht größer als 2,5, bevorzugt nicht größer als 2,0, sehr bevorzugt nicht größer als 1,5 ist.

11. Verfahren nach einem der vorangehenden Ansprüche, **dadurch gekennzeichnet, dass** die erhaltenen Makromoleküle im Mittel 0,9 bis 1,1 durch die Verbindung Z eingeführte ethylenische Doppelbindungen aufweisen.

12. Verfahren nach einem der vorangehenden Ansprüche, **gekennzeichnet durch** eine Aufreinigung, indem nicht umgesetzte Styrolderivate aus dem Polymerisationsprodukt entfernt werden.

13. Oligomer erhältlich nach einem Verfahren nach einem der vorangehenden Ansprüche.

## Claims

1. Process for producing end-group-functionalized oligomers based on acrylic monomers by means of free-radical polymerization, initiated by at least one initiator, starting from an amount of monomer of
80 to 95 mol% of at least one monomer A, selected from the group consisting of acrylates of the general formula CH₂=CH(COOR^{I}), methacrylates of the general formula CH₂=C(CH₃)(COOR^{I}), acrylamides of the general formula CH₂=CH(CONR^{II}R^{III}) and methacrylamides of the general formula CH₂=C(CH₃)(CONR^{II}R^{III}), wherein
R^{I} is an alkyl residue having one to 26 carbon atoms and R^{II} and R^{III} are each alkyl residues having one to 26 carbon atoms or hydrogen,
and
5 to 20 mol% of at least one monomer B, selected from the group consisting of styrene, o-methylstyrene, m-methylstyrene, p-methylstyrene, 4-tert-butylstyrene, 2,4,6-trimethylstyrene, 4-vinylanisole, 4-trifluoromethylstyrene, 4-vinylbiphenyl, 2-vinylnaphthalene and 9-vinylanthracene,
wherein
- the sum total of the amounts of monomers A and monomers B is 100 mol%,
- the polymerization is controlled by means of a difunctional regulator comprising the functional groups R_{F1} and R_{F2}, where the group R_{F1} is an unsubstituted sulfanyl group and where the group R_{F2} of the regulator is selected from the list consisting of hydroxyl groups (-OH), carboxyl groups (-COOH), protected primary amino groups (-NH₂), protected secondary amines (-NHR),
**characterized in that**
- the initiator is an azo or peroxo initiator, which is selected such that it does not bear any R_{F1} and R_{F2} functional groups,
- the total amount of monomer, the initiator and the regulator are initially charged,
- wherein the amount of regulator is selected such that the quantitative ratio of (total used) monomers to (total used) regulator molecules is from 100 : 20 to 100 : 0.5,
- the polymerization is conducted until monomer conversion reaches at least 96%,
- the residual amount of regulator is less than 5 mol%,
- and in a subsequent process step the macromolecules thus obtained are reacted, in the same reactor in which the polymerization was carried out, with at least one compound Z having a functional group R_{F3} and an ethylenic double bond,
- wherein at least that part of the compound Z comprising the ethylenic double bond is linked to the macromolecule by reaction of the functional group R_{F2} with the functional group R_{F3}.

2. Process according to Claim 1, **characterized in that** R¹ is an alkyl residue having one to 12 carbon atoms.

3. Process according to either of the preceding claims, **characterized in that** R^{II} and/or R^{III} are each alkyl residues having one to 12 carbon atoms or hydrogen.

4. Process according to any of the preceding claims, **characterized in that**
the reaction of the group R_{F2} with the functional group R_{F3} is a substitution reaction.

5. Process according to any of the preceding claims, **characterized in that**
the regulator is used in an at least 10-fold excess amount relative to the initiator.

6. Process according to any of the preceding claims, **characterized in that**
the quantitative ratio of (total used) monomers to (total used) regulator molecules is from 100 : 10 to 100 : 1.

7. Process according to any of the preceding claims, **characterized in that**
the regulators used are 2-aminoethanethiol hydrochloride, 2-mercaptoethanol, 3-mercaptopropionic acid, 2-mercaptopropionic acid and/or 2-mercaptoacetic acid.

8. Process according to any of the preceding claims, **characterized in that**
the compound Z having the functional group R_{F3} and an ethylenic double bond is selected from the list comprising acrylic anhydride, methacrylic anhydride, glycidyl acrylate, glycidyl methacrylate, maleic anhydride, acryloyl chloride, methacryloyl chloride, 2-isocyanatoethyl acrylate, 2-isocyanatoethyl methacrylate, 4-chloromethylstyrene, itaconic anhydride, 3,4-epoxycyclohexylmethyl acrylate, epoxycyclohexylmethyl methacrylate.

9. Process according to any of the preceding claims, **characterized in that**
the number-average molecular weight of the resulting macromolecules is in the range of 1000 g/mol to 20 000 g/mol, in particular to 10 000 g/mol.

10. Process according to any of the preceding claims, **characterized in that**
the polydispersity of the resulting polymers is not greater than 2.5, preferably not greater than 2.0, very preferably not greater than 1.5.

11. Process according to any of the preceding claims, **characterized in that**
the resulting macromolecules have on average 0.9 to 1.1 ethylenic double bonds introduced by the compound Z.

12. Process according to any of the preceding claims, **characterized by**
purification by removing unreacted styrene derivatives from the polymerization product.

13. Oligomer obtainable by a process according to any of the preceding claims.

## Revendications

1. Procédé de fabrication d'oligomères fonctionnalisés par des groupes terminaux à base de monomères acryliques par polymérisation radicalaire, initiée par au moins un initiateur, en partant d'une quantité de monomères constituée par :
80 à 95 % en moles d'au moins un monomère A, choisi dans le groupe constitué par les acrylates de formule générale CH₂=CH(COOR^{I}), les méthacrylates de formule générale CH₂₌C(CH₃)(COOR^{I}), les acrylamides de formule générale CH₂=CH(CONR^{II}R^{III}) et les méthacrylamides de formule générale CH₂=C(CH₃)(CONR^{II}R^{III}),
R^{I} étant un radical alkyle de un à 26 atomes C, et R^{II} et R^{III} étant chacun des radicaux alkyle de un à 26 atomes C ou l'hydrogène,
et
5 à 20 % en moles d'au moins un monomère B, choisi dans le groupe constitué par le styrène, 1'o-méthylstyrène, le m-méthylstyrène, le p-méthylstyrène, le 4-tert-butylstyrène, le 2,4,6-triméthylstyrène, le 4-vinylanisole, le 4-trifluorométhylstyrène, le 4-vinylbiphényle, le 2-vinylnaphtalène et le 9-vinylanthracène,
- la somme des quantités des monomères A et des monomères B étant de 100 % en moles,
- la polymérisation étant régulée par un régulateur bifonctionnel comprenant les groupes fonctionnels R_{F1} et R_{F2}, le groupe R_{F1} étant un groupe sulfanyle non substitué et le groupe R_{F2} du régulateur étant choisi dans la liste constituée par les groupes hydroxy (-OH), les groupes carboxy (-COOH), les groupes amino primaires protégés (-NH₂), les amines secondaires protégées (-NHR),
**caractérisé en ce que**
- l'initiateur est un initiateur azo ou peroxo qui est choisi de telle sorte qu'il ne porte pas de groupes fonctionnels R_{F1} et R_{F2},
- la quantité totale des monomères, l'initiateur et le régulateur sont chargés initialement,
- la quantité du régulateur étant choisie de telle sorte que le rapport entre les quantités de matière des monomères (utilisés au total) et des molécules de régulateur (utilisées en total) soit compris entre 100:20 et 100:0,5,
- la polymérisation est réalisée jusqu'à une conversion des monomères d'au moins 96 %,
- la quantité résiduelle de régulateur est inférieure à 5 % en moles,
- et, lors d'une étape de procédé ultérieure, les macromolécules ainsi obtenues sont mises en réaction dans le même réacteur que celui dans lequel la polymérisation a été réalisée avec au moins un composé Z qui comprend un groupe fonctionnel R_{F3} et une double liaison éthylénique,
- au moins la partie contenant la double liaison éthylénique du composé Z étant reliée aux macromolécules par la réaction du groupe fonctionnel R_{F2} avec le groupe fonctionnel R_{F3}.

2. Procédé selon la revendication 1, **caractérisé en ce que** R^{I} est un radical alkyle de un à 12 atomes C.

3. Procédé selon l'une quelconque des revendications précédentes, **caractérisé en ce que** R^{II} et/ou R^{III} sont chacun des radicaux alkyle de un à 12 atomes C ou l'hydrogène.

4. Procédé selon l'une quelconque des revendications précédentes, **caractérisé en ce que** la réaction du groupe R_{R2} avec le groupe fonctionnel R_{F3} est une réaction de substitution.

5. Procédé selon l'une quelconque des revendications précédentes, **caractérisé en ce que** le régulateur est utilisé en un excès de quantité de matière d'au moins 10 fois par rapport à l'initiateur.

6. Procédé selon l'une quelconque des revendications précédentes, **caractérisé en ce que** le rapport entre les quantités de matière des monomères (utilisés au total) et des molécules de régulateur (utilisées au total) est compris entre 100:10 et 100:1.

7. Procédé selon l'une quelconque des revendications précédentes, **caractérisé en ce que** le chlorhydrate de 2-aminoéthane-thiol, le 2-mercaptoéthanol, l'acide 3-mercaptopropionique, l'acide 2-mercaptopropionique et/ou l'acide 2-mercaptoacétique sont utilisés en tant que régulateur.

8. Procédé selon l'une quelconque des revendications précédentes, **caractérisé en ce que** le composé Z comprenant le groupe fonctionnel R_{F3} et une double liaison éthylénique est choisi dans la liste contenant l'anhydride de l'acide acrylique, l'anhydride de l'acide méthacrylique, l'acrylate de glycidyle, le méthacrylate de glycidyle, l'anhydride de l'acide maléique, le chlorure de l'acide acrylique, le chlorure de l'acide méthacrylique, l'acrylate de 2-isocyanatoéthyle, le méthacrylate de 2-isocyanatoéthyle, le 4-chlorométhylstyrène, l'anhydride de l'acide itaconique, l'acrylate de 3,4-époxycyclohexylméthyle, le méthacrylate d'époxycyclohexylméthyle.

9. Procédé selon l'une quelconque des revendications précédentes, **caractérisé en ce que** le poids moléculaire moyen en nombre des macromolécules obtenues se situe dans la plage allant de 1 000 g/mol à 20 000 g/mol, notamment de jusqu'à 10 000 g/mol.

10. Procédé selon l'une quelconque des revendications précédentes, **caractérisé en ce que** la polydispersité des polymères obtenus n'est pas supérieure à 2,5, de préférence pas supérieure à 2,0, de manière très préférée pas supérieure à 1,5.

11. Procédé selon l'une quelconque des revendications précédentes, **caractérisé en ce que** les macromolécules obtenues comprennent en moyenne 0,9 à 1,1 double liaison éthylénique introduite par le composé Z.

12. Procédé selon l'une quelconque des revendications précédentes, **caractérisé par** une purification lors de laquelle des dérivés de styrène non réagis sont éliminés du produit de la polymérisation.

13. Oligomère pouvant être obtenu par un procédé selon l'une quelconque des revendications précédentes.
